# EUROPEAN PATENT APPLICATION

(11) **EP 4 513 285 A1**
(43) Date of publication of application: **26.02.2025**
(21) Application number: 23791739.8
(22) Date of filing: 10.04.2023
(51) Int. Cl.: G05B 19/418, G06Q 50/04, G06Q 10/0833

(54) **LOCATION MANAGEMENT DEVICE, LOCATION MANAGEMENT SYSTEM, AND LOCATION MANAGEMENT METHOD**

(30) Priority: 22.04.2022 JP 2022071097
(71) Applicant: Amada Co., Ltd., Isehara-shi, Kanagawa 259-1196 (JP)
(72) Inventor: KADOTANI, Goro, Isehara-shi, Kanagawa 259-1196 (JP)
(74) Representative: Grünecker Patent- und Rechtsanwälte PartG mbB
(86) International application number: PCT/JP2023/014621
(87) International publication number: WO 2023/204090

(57) **Abstract**

A location management device is configured in such a way as to be capable of managing work-in-progress information (WIP information) regarding a work in progress (WIP) under a manufacturing process of a product including one or more parts and transportation means information regarding transportation means configured to carry the WIP and move around a plant in association with each other, the transportation means information including current location information of the transportation means. The location management device includes an input unit, and is configured in such a way as to be capable of managing the WIP information and the transportation means information in association with each other by a manual operation via the input unit.

## Description

### Technical Field

The present invention relates to a location management device, a location management system and a location management method.

### Background Art

Conventionally, there is a processing line management system for managing a processing line including a storage for storing a processing material on a pallet basis, a processing machine, and material transportation means for transporting the processing material between the storage and the processing machine, the processing line management system including material information storage means for storing material information of the processing material on a pallet basis, and material location management means for storing the location of the processing material in a processing line in association with the stored content of the material information storage means (e.g. Patent Literature 1).

Each of the material transportation means is controlled by a transportation control device consisting of a sequencer and the like. A material name as well as a lot number, a storage date and the like of the processing material used in automatic operation of the processing line are recorded on the transportation control device as processing history. Using these, the material location management means inputs information contained in the transportation control device at a location information input unit, and based on the input information and the stored content of the material information storage means, stores the location of the processing material in the processing line into a location information storage unit in association with the stored content of the material information storage means.

### Citation List

### Patent Literature

Patent Literature 1: Japanese Patent Application Laid-Open Publication No. 2007-34912

### Summary

### Technical Problem

However, in the conventional processing line management system, as described above, the location of the processing material is identified based on the processing history, and therefore there is such a problem that, in the case of checking the progress in real time, a time lag occurs in which the progress of a previous process is completed but the processing material is not present in a predetermined destination.

For example, in the case of scheduled operation in blanking in which a plurality of sheets are collectively processed, the progress of the processing material contained in the processed sheets is completion of processing, but the processing material cannot be taken out during the scheduled operation. In addition, even after the scheduled operation, if a sorting process is not completed, the location of the processing material is not clear. Further, the sorting process is treated as a post-setup of the blanking process in some cases, and is often not clearly subject to progress management.

In order to solve the above issue, by registering the location of each processing material aside from the processing history, it is possible to determine whether a person in charge of the next process can actually start the work. However, there is such a problem that, if the work of registering the location of the processing material is involved, it is necessary to input a location for every processing material, which increases the man-hours and may prevent efficient production of a product.

Aspects of the present invention are a location management device, a location management system and a location management method that can manage the current location of a work in progress (WIP) without inputting location information for each WIP.

### Solution to Problem

A location management device according to an aspect of the present invention is configured in such a way as to be capable of managing work-in-progress information (WIP information) regarding a work in progress (WIP) under a manufacturing process of a product including one or more parts and transportation means information regarding transportation means configured to carry the WIP and move around a plant in association with each other, the transportation means information including current location information of the transportation means.

A location management system according to an aspect of the present invention includes: a location management device; and a production management unit, in which the location management device is configured in such a way as to be capable of managing work-in-progress information (WIP information) regarding a work in progress (WIP) under a manufacturing process of a product including one or more parts and transportation means information regarding transportation means configured to carry the WIP and move around a plant in association with each other, the production management unit is configured to create production arrangement information regarding the product, the WIP information is created based on the production arrangement information, and the transportation means information includes current location information of the transportation means.

A location management method according to an aspect of the present invention includes: creating production arrangement information regarding a product including one or more parts; creating work-in-progress information (WIP information) regarding a work in progress (WIP) under a manufacturing process of the product based on the production arrangement information; and associating the WIP information and transportation means information regarding transportation means configured to carry the WIP and move around a plant, the transportation means information including current location information of the transportation means.

According to the location management device, the location management system and the location management method according to aspects of the present invention, by managing the WIP information regarding the WIP and the transportation means information including the current location information of the transportation means carrying the WIP in association with each other, it is possible to manage the current location of the WIP without inputting location information for each WIP.

### Advantageous Effect of Invention

According to the location management device, the location management system and the location management method according to aspects of the present invention, it is possible to manage the current location of the WIP without inputting location information for each WIP.

### Brief Description of Drawings

[Figure 1] Figure 1 is a schematic diagram showing a location management system according to an embodiment of the present invention.
[Figure 2] Figure 2 is a diagram showing an example of a plant in which location management of the present embodiment is carried out.
[Figure 3] Figure 3 is a functional block diagram showing a location management device of the present embodiment.
[Figure 4] Figure 4 is a diagram showing an example of a WIP information association method of the present embodiment.
[Figure 5] Figure 5 is a diagram showing an example of the WIP information association method of the present embodiment.
[Figure 6] Figure 6 is a flow chart showing an example of operations of an association unit of the present embodiment.
[Figure 7] Figure 7 is a diagram showing an example of the association method in the case where category information of the present embodiment is information about a work area of a next process.
[Figure 8] Figure 8 is a diagram showing an example of the association method in the case where the category information of the present embodiment is information about a processing machine of a next process.
[Figure 9] Figure 9 is a diagram showing an example of the association method in the case where the category information of the present embodiment is a bill of materials.
[Figure 10] Figure 10 is a diagram showing an example of the association method in the case where the category information of the present embodiment is information about a material.
[Figure 11] Figure 11 is a functional block diagram showing a work area terminal of the present embodiment.
[Figure 12] Figure 12 is a diagram showing an example of a pallet list edit screen of the present embodiment.
[Figure 13] Figure 13 is a diagram showing an example of a sorting screen of the present embodiment.
[Figure 14] Figure 14 is a diagram showing an example of the sorting screen of the present embodiment.
[Figure 15] Figure 15 is a diagram showing an example of a transportation destination registration screen of the present embodiment.
[Figure 16] Figure 16 is a diagram showing an example of the transportation destination registration screen of the present embodiment.
[Figure 17] Figure 17 is a flow chart showing an example of a location management method of the present embodiment.

### Description of Embodiment

In the following, a preferred embodiment for carrying out the present invention will be described by using the drawings. Note that the following embodiment does not limit the invention according to the claims, and all combinations of the features described in the embodiment are not necessarily essential for the solution of the invention.

### [Overall Configuration of Location Management System According to Present Embodiment]

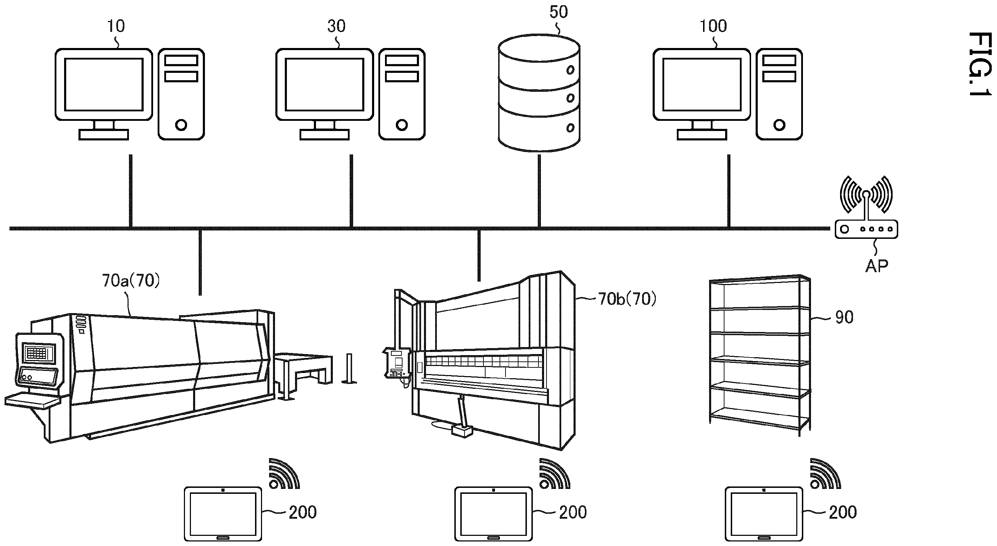

Figure 1 is a schematic diagram showing a location management system according to an embodiment of the present invention.

First, with reference to Figure 1, a location management system 1 according to an embodiment of the present invention will be schematically described. The location management system 1 according to the present embodiment is a location management system that manages the location of a WIP that is under a manufacturing process of a product including one or more parts. As shown in Figure 1, the location management system 1 schematically includes a production management device 10 serving as a production management unit, a design assistance device 30 serving as a design assistance unit, and a location management device 100.

In the present embodiment, a WIP refers to a product that is in its manufacturing process and is yet to be completed as merchandise. In addition, in the present embodiment, a product refers to an item that is ready to be delivered to a customer after the whole manufacturing process in the plant. Further, in the present embodiment, a part refers to an item included in a product.

The manufacturing process of the product includes various processes for completing the product such as, for example, a blanking process of performing blanking to cut out a metal plate (hereinafter referred to as a sheet in the present embodiment) with a predetermined size into a certain shape, a sorting process of sorting WIPs on the sheet after the blanking process, a secondary process, an assembly process, an inspection process, and the like. The secondary process includes, for example, bending, coating, deburring and the like. The assembly process includes welding, screwing and the like.

In addition, as shown in Figure 1, the location management system 1 includes a server 50, a processing machine 70, and a work area terminal 200 used in each work area in a plant. Further, the location management system 1 may also include an inventory shelf 90 and an automated warehouse (not shown). In the present embodiment, a "work area" is not limited to a work area of each manufacturing process and also includes an inventory area (storage space) in which the inventory shelf 90 and the like are placed, an inspection area, and the like.

The production management device 10, the design assistance device 30, the server 50, the processing machine 70, the location management device 100, and the work area terminal 200 are communicatively connected to each other via a private network such as a local network or an intranet. If they are connected through wireless communication, the location management system 1 may further include one or more access points AP.

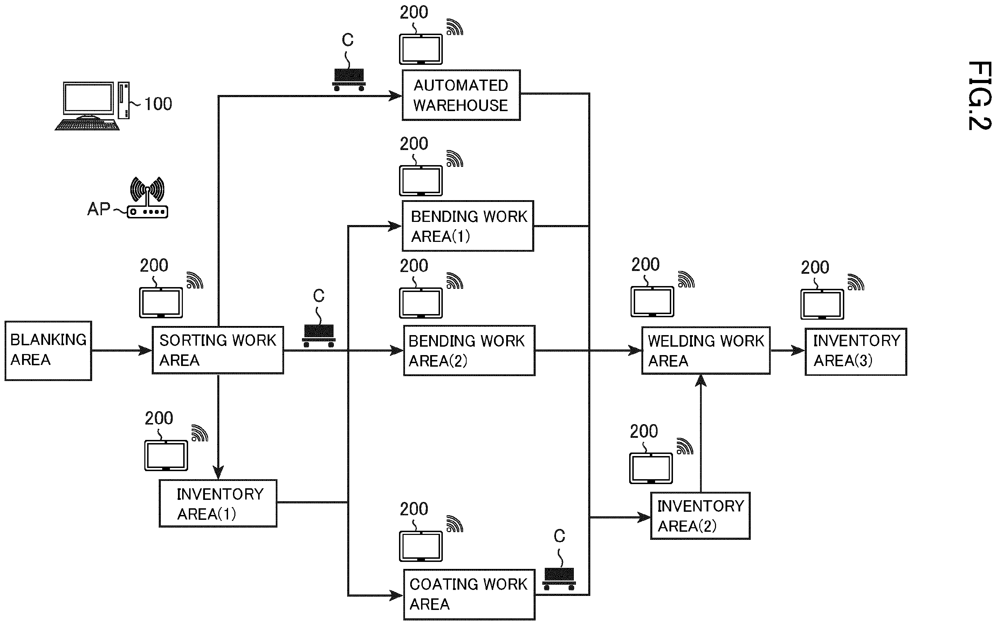

Figure 2 is a diagram showing an example of a plant in which location management of the present embodiment is carried out.

The location management system 1 of the present embodiment can be used in the plant as shown in Figure 2, for example. The plant shown in Figure 2 includes, as work areas, a "blanking area" for performing the blanking process, a "sorting work area" for performing the sorting process, a "bending work area (1)" and a "bending work area (2)" for performing the bending process, a "coating work area" for performing the coating process, a "welding work area" for performing the welding process, an "inventory area (1)" to an "inventory area (3)", and an "automated warehouse". Note that the plant in which the location management is carried out is not limited to the example of Figure 2 and can adopt any various configurations.

As shown in Figure 2, the location management system 1 includes transportation means C that carries a WIP and moves around the plant. In the present embodiment, the transportation means C is described as a pallet, but there is no limitation thereto. The transportation means C can adopt any various configurations as long as it can carry and transport the WIP. The transportation means C may also be, for example, an AGV (Automatic Guided Vehicle), a container, a flatbed cart, a hand cart, a cage cart, or the like.

The transportation means C is assigned a unique transportation means identifier (for example, a pallet number) uniquely identifying the transportation means C. For example, the transportation means C may have, e.g. on its surface, the transportation means identifier directly displayed thereon or a two-dimensional code displayed thereon so that the transportation means identifier can be checked by reading the two-dimensional code. In addition, the transportation means C may include information transmission means such as an RFID (Radio Frequency IDentification) tag such as a contactless IC (Integrated Circuit) or a beacon and be configured such that the transportation means identifier can be checked by receiving a signal from the information transmission means. Further, the transportation means C more preferably includes location information checking means such as a beacon or a GPS, but there is no limitation thereto.

The production management device 10 is an electronic computer such as a desktop personal computer, a laptop computer, or a tablet terminal. The production management device 10 manages order information, product information, manufacturing process information of the product and parts, and progress information of each process, and performs production arrangement of an ordered product. In addition, when performing production arrangement of the product, the production management device 10 is configured to create production arrangement information 12 of the product.

The production arrangement information 12 includes a customer, information about the product and parts, a processing program for the parts, and the like. The information about the product and parts includes, for example, a product name, part names, production delivery dates of the product and parts, expected processing dates of the product and parts, manufacturing process information of the product and parts, quantities of the product and parts, production numbers of the product and parts, and the like.

The production management device 10 is configured in such a way as to be capable of outputting a production arrangement document of the created production arrangement information 12. The production management device 10 is configured in such a way as to be capable of checking the progress of each process based on WIP information 142, which will be described later, associated with the production arrangement information 12.

The design assistance device 30 is an electronic computer such as a desktop personal computer, a laptop computer or a tablet terminal, and has CAD (computer-aided design)/CAM (computer-aided manufacturing) software. The design assistance device 30 creates drawing data of the parts and product, a processing program for the processing machine 70, and processing schedule information 32.

For example, if the processing machine 70 is a blanking machine 70a, which will be described later, the design assistance device 30 is configured to perform nesting in which parts with the same thickness included in the production arrangement information 12 are selected based on the production arrangement information 12 output from the production management device 10 and the processing program of the parts is arranged without gaps, and create sheet data (the processing program). Then, the design assistance device 30 creates processing schedule information 32 regarding the nested sheet data. The processing schedule information 32 includes a schedule creation date of the processing schedule information 32, a schedule name, an expected processing date, an expected processing machine, a sheet name, a listing of parts included in the sheet, information about the parts, and the like.

The design assistance device 30 saves the created processing program and the created processing schedule information 32 into a production technology management database of the server 50. Further, the design assistance device 30 is configured in such a way as to be capable of outputting a schedule instruction document of the created processing schedule information 32. In the present embodiment, the processing schedule information 32 may be a concept including both a collection of processing schedule information 32 regarding a plurality of pieces of sheet data and processing schedule information 32 regarding a single piece of sheet data, or may be either one.

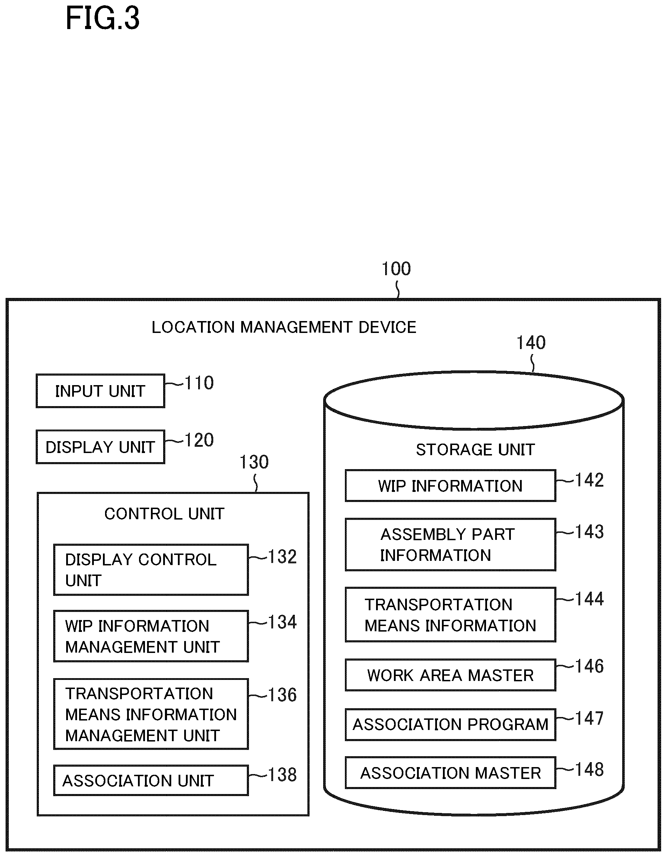

Figure 3 is a functional block diagram showing the location management device 100 of the present embodiment.

The location management device 100 is an electronic computer such as a desktop personal computer, a laptop computer or a tablet terminal, and includes an input unit 110, a display unit 120, a control unit 130, and a storage unit 140, as shown in Figure 3. The location management device 100 is configured in such a way as to be capable of managing WIP information 142 regarding the WIP and transportation means information 144 regarding the transportation means C in association with each other.

The location management device 100 may be non-transportable and installed in an office or the like, or may be transportable and used in each work area in the plant like the work area terminal 200. That is, it is also possible that the location management system 1 does not include the work area terminal 200 and the location management device 100 serves as the work area terminal 200. In addition, it is also possible that the location management device 100 serves as one of a plurality of work area terminals 200.

The input unit 110 is, for example, composed of input devices such as a keyboard, a mouse, a touchpad, and a joystick, and operating the input unit 110 enables an information input function usually required in the location management device 100 as well as operations such as association of the WIP information 142 and the transportation means information 144, for example. With such configurations, the location management device 100 enables manually associating the WIP information 142 and the transportation means information 144 via the input unit 110.

The display unit 120 includes a display as a display device, and has a screen display function usually required in the location management device 100 as well as displaying a pallet list edit screen 122, which will be described later, a sorting screen 124, which will be described later, a transportation destination registration screen 126, which will be described later, and the like, for example. In addition, the display unit 120 can be composed of a touch screen having a function of the input unit 110. If the display unit 120 is composed of a touch screen, a user can input the association between the WIP information 142 and the transportation means information 144 to the location management device 100 by operating the display unit 120, for example.

Note that the configurations of the input unit 110 and the display unit 120 are not limited to the above-described configurations, and are not limited thereto as long as they have equivalent functions instead of the input unit 110 and the display unit 120 (for example, display means, input means or the like that is remotely available).

The control unit 130 is composed of, for example, an integrated processing device having a CPU (Central Processing Unit) and a GPU (Graphics Processing Unit). As shown in Figure 3, the control unit 130 includes a display control unit 132 that controls the display unit 120, a WIP information management unit 134, a transportation means information management unit 136, and an association unit 138.

The display control unit 132 controls a screen displayed on the display unit 120. In addition, the display control unit 132 is configured in such a way as to be capable of displaying a pallet list edit screen 122, a sorting screen 124, and a transportation destination registration screen 126 on a display unit 220 of the work area terminal 200. Further, when displaying the WIP information 142 on the sorting screen 124 and the transportation destination registration screen 126, the display control unit 132 controls the display unit 120 and the display unit 220 of the work area terminal 200 to highlight WIP information 142 of a plurality of pieces of WIP information 142 including category information, which will be described later.

The highlighting includes, for example, flashing, color-coding, displaying frame lines and the like. In addition, in the case of displaying an image (for example, CAD data or the like) included in the WIP information 142, a pattern such as hatching may be applied to the image of the WIP information 142 including the category information, the image may be color-coded, or the shade of color of the image may be changed.

In addition, when displaying the WIP information 142 on the transportation destination registration screen 126, the display control unit 132 controls the display unit 120 and the display unit 220 of the work area terminal 200 to display only WIP information 142 of a product for which processing is completed based on progress information of processing in a work area in which the progress information of processing can be acquired from the processing machine 70.

The WIP information management unit 134 is configured to create and manage WIP information 142 based on at least one of the production arrangement information 12 created by the production management device 10 and the processing schedule information 32 created by the design assistance device 30.

The WIP information 142 includes, for example, a part name of the WIP, a production number of the WIP, a quantity of the WIP, a production delivery date of the WIP, manufacturing process information indicating a manufacturing process for completing the product, information about a material of the WIP, a bill of materials (BOM) of the product including the WIP as a constituent part, and the like. The manufacturing process information includes information about a work area used in each process, information about a processing machine 70 used in each process, an expected processing date of each process, and the like. The information about the work area is, for example, a work area name such as "sorting work area", "inventory area (1)", "coating work area" or the like as shown in Figure 2, coordinate information of each work area, or the like.

The information about the processing machine 70 is, for example, a processing machine name of the processing machine 70, the presence or absence of a processing program used in the processing machine 70, tool information included in the processing program, or the like. The information about the material of the product is, for example, a material name, the thickness of the material, or the like.

In addition, the WIP information management unit 134 is configured to, after an assembly process of combining a plurality of WIPs into an assembly part, create assembly part information 143 of the assembly part, and manage the WIP information 142 of all the WIPs included in the assembly part in association with the assembly part information 143.

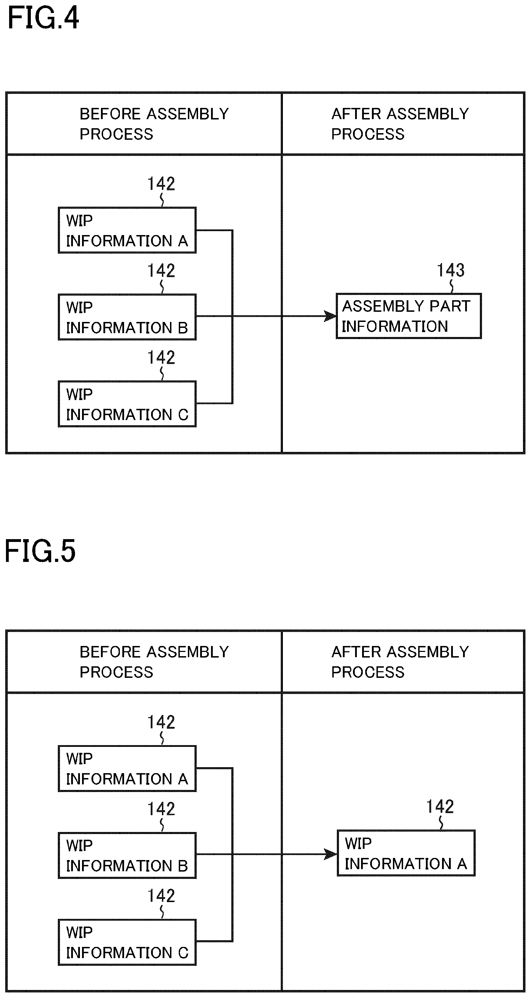

Figure 4 is a diagram showing an example of a WIP information association method of the present embodiment.

For example, as shown in Figure 4, when WIPs A to C are assembled into an assembly part, assembly part information 143 of the assembly part is created, and the WIP information 142 of the WIPs A to C is associated with the created assembly part information 143.

Instead of creating the assembly part information 143, the WIP information management unit 134 may also be configured to select a WIP as a representative WIP and manage the WIP information 142 of all the WIPs included in the assembly part in association with the WIP information 142 of the representative WIP.

Figure 5 is a diagram showing an example of the WIP information association method of the present embodiment.

For example, as shown in Figure 5, when WIPs A to C are assembled into an assembly part, the WIP A is selected as a representative WIP, and the WIP information 142 of the WIPs B and C is associated with the WIP information 142 of the WIP A.

The transportation means information management unit 136 is configured to create, edit and manage the transportation means information 144. The transportation means information 144 is created for each piece of transportation means C. The transportation means information 144 includes a transportation means identifier, current location information of the transportation means C, and transportation destination information of the transportation means C. The current location information and the transportation destination information include any of work areas registered in a work area master 146, which will be described later, of the storage unit 140.

Specifically, the transportation means information management unit 136 is configured in such a way as to be capable of registering the transportation means information 144 of the transportation means C input by inputting the transportation means identifier to the input unit 110 or the like. In addition, if the transportation means C includes location information checking means, the transportation means information management unit 136 is configured in such a way as to be capable of acquiring positional information of the transportation means C and is configured in such a way as to be capable of registering the current location of the transportation means C in the plant based on the positional information.

The association unit 138 is configured in such a way as to be capable of associating the WIP information 142 managed by the WIP information management unit 134 and the transportation means information 144 managed by the transportation means information management unit 136. In addition, the association unit 138 is configured in such a way as to be capable of editing and managing association information of the WIP information 142 and the transportation means information 144. Specifically, the association unit 138 registers the association information of the WIP information 142 and the transportation means information 144 into an association master 148, which will be described later, of the storage unit 140, and manages it. The association unit 138 can manage the location information of the WIP by associating the WIP information 142 and the transportation means information 144 of the transportation means C carrying the WIP with the WIP information 142.

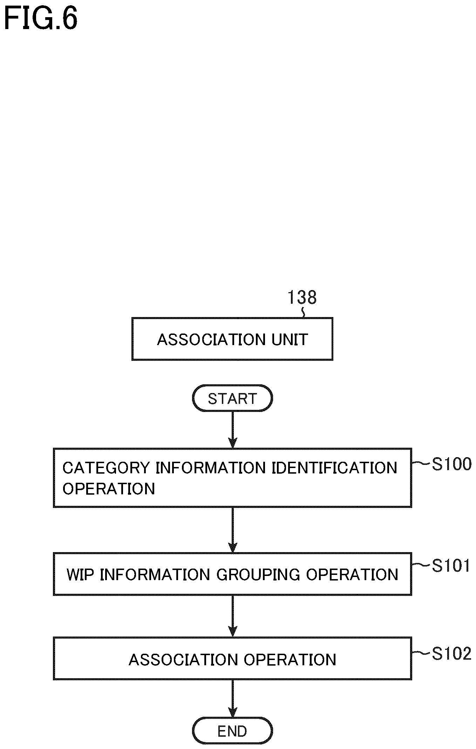

Figure 6 is a flow chart showing an example of operations of the association unit of the present embodiment.

In the present embodiment, as shown in Figure 6, the association unit 138 is configured in such a way as to be capable of performing a category information identification operation (S100 in Figure 6) of identifying category information from the WIP information 142, a WIP information grouping operation (S101 in Figure 6) of grouping the WIP information 142 according to the category information, and an association operation (S102 in Figure 6) of associating a group of WIP information 142 obtained by the grouping and the transportation means information 144 of transportation means C carrying a plurality of WIPs included in the group of WIP information 142.

The category information is, for example, information about a work area used in a next process. If the category information is the information about the work area used in the next process, it is possible to deal with a situation in which a work area having no processing machine 70 (for example, the inventory area, the automated warehouse or the like) is included as a candidate for the work area of the next process, which enhances versatility.

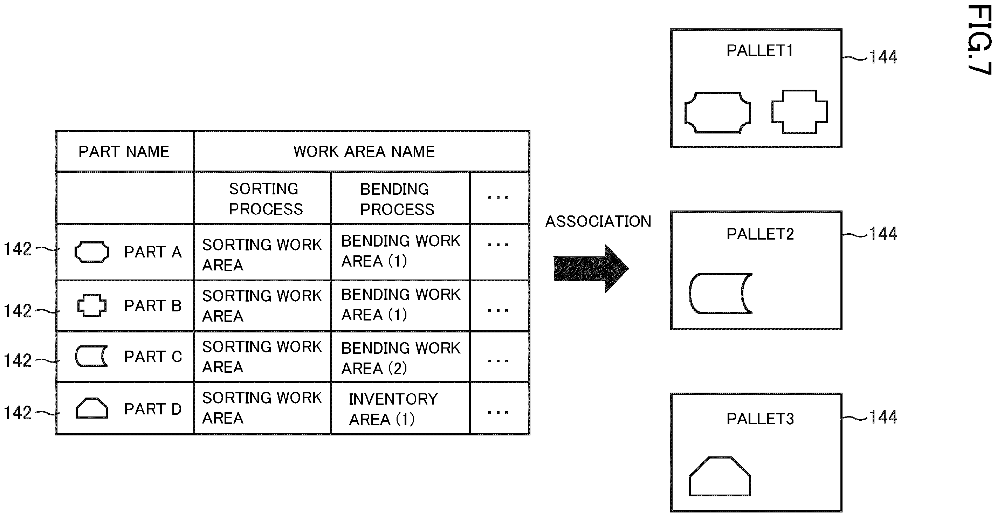

Figure 7 is a diagram showing an example of the association method in the case where the category information of the present embodiment is the information about the work area of the next process.

The example of Figure 7 illustrates association during the sorting process after the blanking process. If the category information is a work area name, the association unit 138 first identifies the work area name of the next process (bending process) to the sorting process from the WIP information 142 of each of WIPs whose part names are parts A to D. As shown in Figure 7, the WIP information 142 of the part A and the part B includes a work area name of "bending work area (1)" as the information about the work area of the next process. Similarly, the WIP information 142 of the part C includes a work area name of "bending work area (2)" as the information about the work area of the next process. The part D is not subjected to processing in the bending process, and the WIP information 142 of the part D includes a work area name of "inventory area (1)" as the information about the work area of the next process.

Next, the association unit 138 groups the WIP information 142 for each of the identified work area names, and associates a group of WIP information 142 obtained by the grouping and the transportation means information 144 of transportation means C (pallets 1 to 3) carrying a plurality of WIPs included in the group of WIP information 142. Here, the current location information of the transportation means information 144 of each of the pallets 1 to 3 is the "sorting work area". The transportation destination information of the transportation means information 144 of the pallet 1 is the "bending work area (1)". The transportation destination information of the transportation means information 144 of the pallet 2 is the "bending work area (2)". The transportation destination information of the transportation means information 144 of the pallet 3 is the "inventory area (1)".

In this case, the association unit 138 associates the WIP information 142 of the part A and the part B and the transportation means information 144 of the pallet 1. In addition, the association unit 138 associates the WIP information 142 of the part C and the transportation means information 144 of the pallet 2. Further, the association unit 138 associates the WIP information 142 of the part D and the transportation means information 144 of the pallet 3.

In addition, the category information may also be information about the processing machine 70 used in the next process. If the category information is the information about the processing machine 70, it is possible to associate the WIP information 142 and the transportation means information 144 of the transportation means C for each processing machine 70 used for processing the WIP even when two or more processing machines 70 of the same type are installed in one work area of the next process, for example. In addition, if a plurality of products are processed with the same bending machine but using different tools, for example, it is possible to associate the transportation means information 144 of the transportation means C and the WIP information 142 according to tool information included in the processing program.

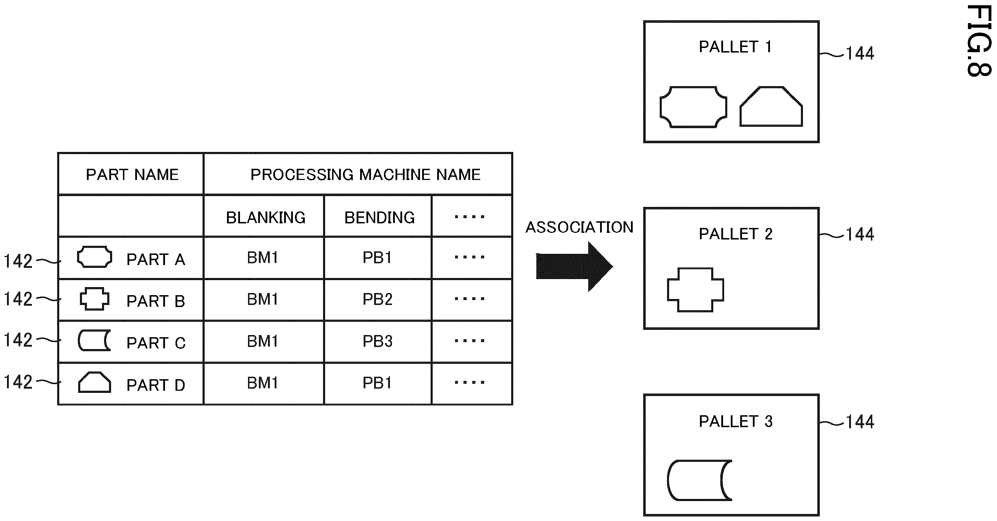

Figure 8 is a diagram showing an example of the association method in the case where the category information of the present embodiment is information about the processing machine of the next process.

The example of Figure 8 illustrates association during the sorting process after the blanking process. If the category information is a processing machine name of a secondary processing machine 70b (bending machine), the association unit 138 first identifies the processing machine name of the secondary processing machine 70b used in the next process (bending process) to the sorting process from the WIP information 142 of each of WIPs whose part names are parts A to D. As shown in Figure 8, the WIP information 142 of the part A and the part D includes a processing machine name of "PB1" as the information about the processing machine 70 of the next process (bending process). Similarly, the WIP information 142 of the part B includes a processing machine name of "PB2" as the information about the processing machine 70 of the next process. In addition, the WIP information 142 of the part C includes a processing machine name of "PB3" as the information about the processing machine 70 of the next process.

Next, the association unit 138 groups the WIP information 142 for each of the identified processing machine names, and associates a group of WIP information 142 obtained by the grouping and the transportation means information 144 of transportation means C (pallets 1 to 3) carrying a plurality of WIPs included in the group of WIP information 142. In this case, the association unit 138 associates the WIP information 142 of the part A and the part D and the transportation means information 144 of the pallet 1. In addition, the association unit 138 associates the WIP information 142 of the part B and the transportation means information 144 of the pallet 2. Further, the association unit 138 associates the WIP information 142 of the part C and the transportation means information 144 of the pallet 3.

Further, the category information may also be a bill of materials. If the category information is a bill of materials, it is possible to collect WIPs required for assembly before the assembly process and associate a plurality of pieces of WIP information 142 of the collected WIPs and a piece of transportation means information 144, for example. Note that a plurality of WIPs whose WIP information 142 includes the same bill of materials are a plurality of WIPs relating to the same production arrangement.

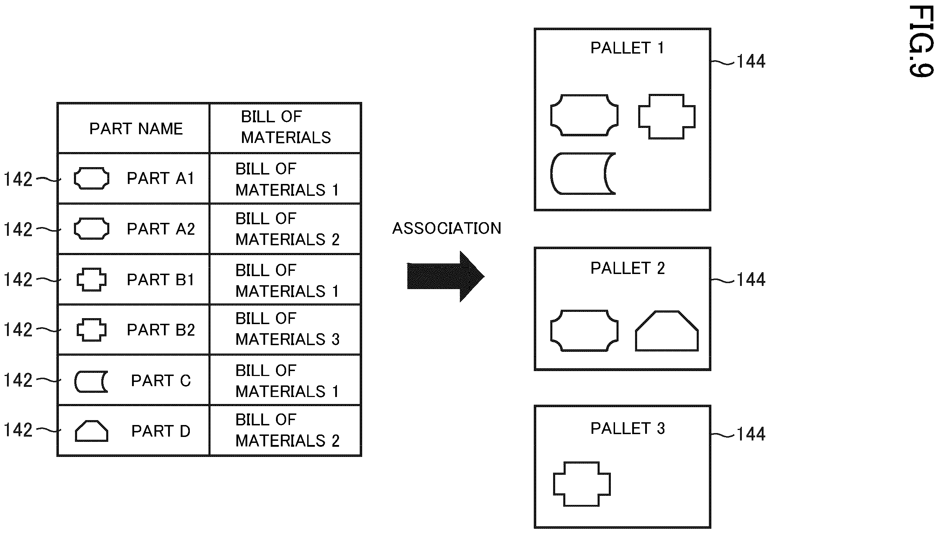

Figure 9 is a diagram showing an example of the association method in the case where the category information of the present embodiment is a bill of materials.

The example of Figure 9 illustrates association after the secondary process and before the assembly process. If the category information is a bill of materials, the association unit 138 first identifies a bill of materials from the WIP information 142 of each of WIPs whose part names are parts A1 to D. As shown in Figure 9, the WIP information 142 of the part Al, the part B1 and the part C includes a bill of materials 1. Similarly, the WIP information 142 of the part A2 and the part D includes a bill of materials 2. In addition, the WIP information 142 of the part B2 includes a bill of materials 3. Note that the part A1 and the part A2 have different part names for convenience of description, but the part A1 and the part A2 may both have a part name of part A. Similarly, the part B1 and the part B2 may both have a part name of part B.

Next, the association unit 138 groups the WIP information 142 for each of the identified bills of materials, and associates a group of WIP information 142 obtained by the grouping and the transportation means information 144 of transportation means C (pallets 1 to 3) carrying a plurality of WIPs included in the group of WIP information 142. In this case, the association unit 138 associates the WIP information 142 of the part Al, the part B1 and the part C and the transportation means information 144 of the pallet 1. In addition, the association unit 138 associates the WIP information 142 of the part A2 and the part D and the transportation means information 144 of the pallet 2. Further, the association unit 138 associates the WIP information 142 of the part B2 and the transportation means information 144 of the pallet 3.

Furthermore, the category information may also be information about a material. If the category information is information about a material, it is possible to, when simultaneously or successively processing WIPs of the same type of material in the next process, collect those parts and associate a plurality of pieces of WIP information 142 of the collected parts and a piece of transportation means information 144.

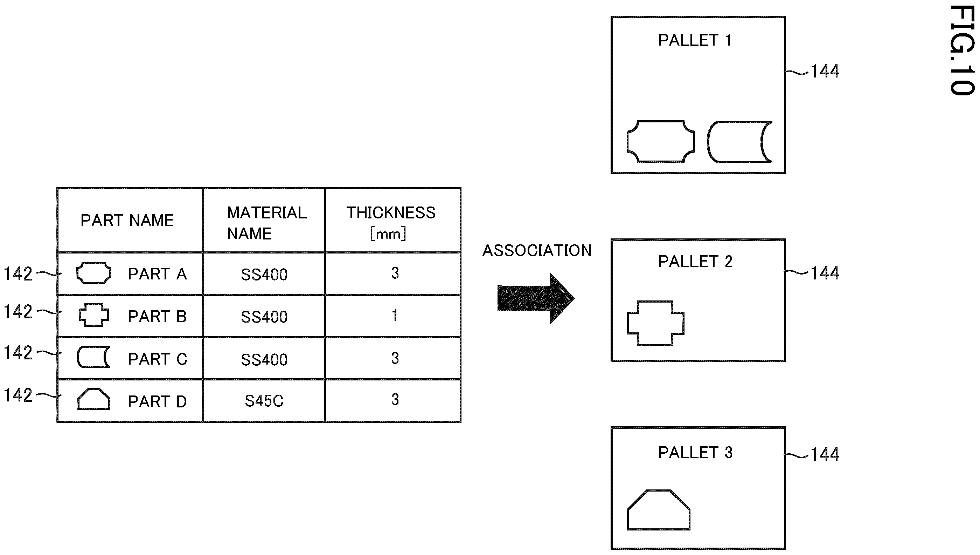

Figure 10 is a diagram showing an example of the association method in the case where the category information of the present embodiment is information about a material.

The example of Figure 10 illustrates association after the sorting process or the secondary process and before another secondary process. If the category information is a material name and a thickness, the association unit 138 first identifies a material name and a thickness from the WIP information 142 of each of WIPs whose part names are parts A to D. As shown in Figure 10, the WIP information 142 of the part A and the part C includes a material name of "SS400" and a thickness of "3[mm]". Similarly, the WIP information 142 of the part B includes a material name of "SS400" and a thickness of "1[mm]". In addition, the WIP information 142 of the part D includes a material name of "S45C" and a thickness of "3[mm]".

Next, the association unit 138 groups the WIP information 142 for each of the identified material names and thicknesses, and associates a group of WIP information 142 obtained by the grouping and the transportation means information 144 of transportation means C (pallets 1 to 3) carrying a plurality of WIPs included in the group of WIP information 142. In this case, the association unit 138 associates the WIP information 142 of the part A and the part C and the transportation means information 144 of the pallet 1. In addition, the association unit 138 associates the WIP information 142 of the part B and the transportation means information 144 of the pallet 2. Further, the association unit 138 associates the WIP information 142 of the part D and the transportation means information 144 of the pallet 3. Note that both a material name and a thickness are used as identifiers in the present embodiment, but only a material name or a thickness may be used.

The association unit 138 having the above-described configurations may always automatically associate the WIP information 142 and the transportation means information 144 based on the category information, or may basically allow association by manual operations of the user and perform automatic association only if the user selects association by automatic operations.

The storage unit 140 includes a storage medium such as an HDD (Hard Disk Drive) or an SSD (Solid State Drive) and stores various pieces of data in a readable and writable manner. As shown in Figure 3, the storage unit 140 stores the WIP information 142, the assembly part information 143, the transportation means information 144, a work area master 146, an association program 147, and an association master 148. In addition, the storage unit 140 stores a program required for controlling the units of the location management device 100.

A listing of work areas in the plant is registered in the work area master 146. In information about a work area registered in the work area master 146, information about a manufacturing process performed in the work area and information about a processing machine 70 or the like installed in the work area are associated with each other.

The association program 147 causes the association unit 138 of the control unit 130 to perform the category information identification operation of identifying category information from the WIP information 142, the WIP information grouping operation of grouping the WIP information 142 according to the category information, and the association operation of associating a group of WIP information 142 obtained by the grouping and the transportation means information 144 of transportation means C carrying a plurality of WIPs included in the group of WIP information 142.

In the association master 148, a listing of association information of the WIP information 142 and the transportation means information 144 associated by the association unit 138 of the control unit 130 is registered.

The location management device 100 having the above-described configurations is configured to allow the WIP information 142 and the transportation means information 144 to be viewed in association with each other on the work area terminal 200. In addition, the location management device 100 provides an application suitable for the location (work area) in which the work area terminal 200 is arranged.

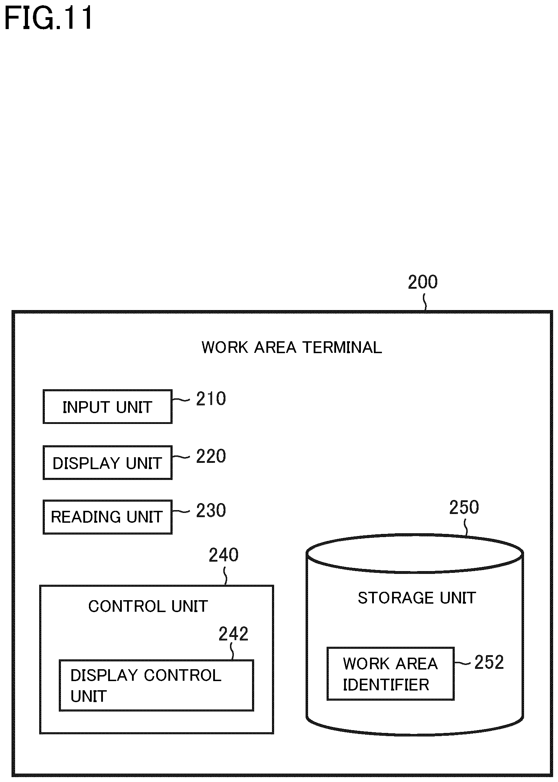

Figure 11 is a functional block diagram showing the work area terminal of the present embodiment.

The work area terminal 200 is an electronic computer such as a desktop personal computer, a laptop computer or a tablet terminal, and includes an input unit 210, a display unit 220, a reading unit 230, a control unit 240, and a storage unit 250, as shown in Figure 11. The work area terminal 200 connects to the production management device 10, the location management device 100 and the like via a network. The work area terminal 200 is configured to allow the WIP information 142 and the transportation means information 144 to be viewed in association with each other by connecting to the location management device 100. In addition, the work area terminal 200 is configured in such a way as to be capable of editing and managing the association information of the WIP information 142 and the transportation means information 144.

Note that it is preferable that the work area terminal 200 is arranged for each work area in the plant as shown in Figure 2, but there is no limitation thereto, and one work area terminal 200 may be used in a plurality of work areas. In addition, the work area terminal 200 may also be an NC device associated with the processing machine 70.

The input unit 210 is, for example, composed of input devices such as a keyboard, a mouse, a touchpad, and a joystick, and operating the input unit 210 enables an information input function usually required in the work area terminal 200 as well as operations such as association of the WIP information 142 and the transportation means information 144, for example. With such configurations, the work area terminal 200 enables manually associating the WIP information 142 and the transportation means information 144 via the input unit 210.

The display unit 220 includes a display as a display device, and has a screen display function usually required in the work area terminal 200 as well as displaying the pallet list edit screen 122, the sorting screen 124, the transportation destination registration screen 126 and the like, for example. In addition, the display unit 220 can be composed of a touch screen having a function of the input unit 210. If the display unit 220 is composed of a touch screen, the user can input the association between the WIP information 142 and the transportation means information 144 to the work area terminal 200 by operating the display unit 220, for example.

Note that the configurations of the input unit 210 and the display unit 220 are not limited to the above-described configurations, and are not limited thereto as long as they have equivalent functions instead of the input unit 210 and the display unit 220 (for example, display means, input means or the like that is remotely available).

The reading unit 230 is configured in such a way as to be capable of reading the transportation means identifier of the transportation means C. For example, if a two-dimensional code is displayed on the transportation means C, a two-dimensional code reader or the like can be adopted as the reading unit 230. In addition, if the transportation means C includes information transmission means such as an RFID tag or a beacon, information receiving means capable of receiving a signal from the information transmission means can be adopted.

The control unit 240 is composed of, for example, an integrated processing device having a CPU and a GPU. As shown in Figure 11, the control unit 240 includes a display control unit 242 that controls the display unit 220.

The storage unit 250 includes a storage medium such as an HDD or an SSD and stores various pieces of data in a readable and writable manner. As shown in Figure 11, the storage unit 250 stores a work area identifier 252. In addition, the storage unit 250 stores a program required for controlling the units of the work area terminal 200. The work area identifier 252 is an identifier that allows for identifying a work area in which the work area terminal 200 is arranged. The work area identifier 252 may be stored in the storage unit 250 in advance, or, if one work area terminal 200 is used in a plurality of work areas, may be registered by reading in each work area a two-dimensional code or the like indicating the work area or receiving a beacon or the like installed in each work area.

The server 50 includes a storage medium such as an HDD or an SSD, and stores a production technology management database (not shown). The server 50 can adopt various known configurations, and detailed description thereof will be omitted. The production technology management database includes data or the like created by the production management device 10, the design assistance device 30 and the location management device 100. The data saved in the production technology management database is referenced by the production management device 10, the design assistance device 30, the location management device 100 and the work area terminal 200.

The processing machine 70 is a blanking machine 70a that processes a sheet by NC control, a secondary processing machine 70b that processes individual WIPs after the blanking, or the like. The blanking machine 70a is, for example, a laser processing machine, a turret punch press, a plasma processing machine, a water jet processing machine, or the like. The secondary processing machine 70b is, for example, a bending machine such as a press brake, an NC milling machine, an NC lathe, a machining center, a drill press, a grinder, or the like. The processing machine 70 is configured in such a way as to be capable of communicating with the production management device 10, the design assistance device 30, the server 50 and the location management device 100.

In addition, the processing machine 70 may transmit processing history to the production management device 10 at the time of start of the processing, at the time of interruption of the processing, and at the time of completion of the processing. The processing history includes, for example, information such as times corresponding to the start of the processing, the interruption of the processing, and the completion of the processing, respectively, for each sheet. The blanking machine 70a performs processing by reading the sheet data of the processing schedule information 32 from the production technology management database stored in the server 50, for example. The secondary processing machine 70b performs processing by reading a processing program of the processing schedule information 32 from the production technology management database stored in the server 50, for example.

Next, screens displayed on the display unit 120 of the location management device 100 and the display unit 220 of the work area terminal 200 will be described. Note that, in the following description, a "current work area" refers to a work area in which the work area terminal 200 is arranged. For example, when the screens are displayed on the work area terminal 200 arranged in the sorting work area in Figure 2, the current work area is the sorting work area. When the screens are displayed on the location management device 100 used in a place other than the work areas such as an office, the current work area is a predetermined work area set in advance.

Note that it is also possible to display a different work area as the current work area. For example, it is also possible to display a screen of the welding work area on the work area terminal 200 arranged in the sorting work area. In this case, the welding work area is the current work area. That is, a work area currently displayed on the display unit 120 of the location management device 100 or the display unit 220 of the work area terminal 200 is the current work area.

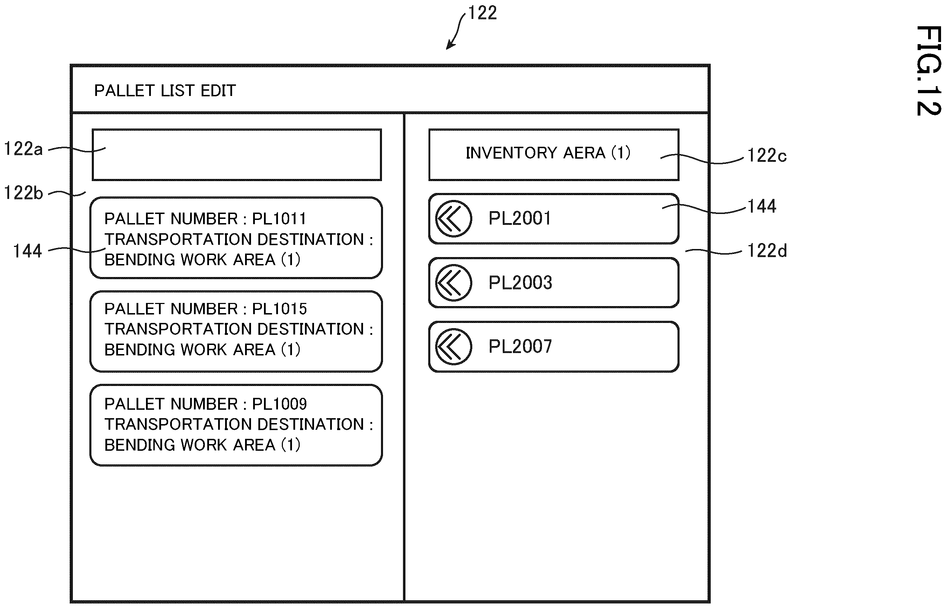

Figure 12 is a diagram showing an example of the pallet list edit screen of the present embodiment.

As shown in Figure 12, the user can register, edit and check the transportation means information 144 on the pallet list edit screen 122. The pallet list edit screen 122 includes a pallet number input section 122a, a current work area pallet listing display region 122b, a work area selection section 122c, and a selected work area pallet listing display region 122d. The pallet number input section 122a is configured to allow the transportation means identifier of the transportation means C to be input. The transportation means identifier may be input at the input unit 110 of the location management device 100 or the input unit 210 of the work area terminal 200, or may be input by reading the transportation means identifier by the reading unit 230 of the work area terminal 200.

The current work area pallet listing display region 122b is configured to display a listing of transportation means information 144 in which the current location information of the transportation means C is the current work area (the bending work area (1) in the example of Figure 12). When a pallet number (transportation means identifier) is input to the pallet number input section 122a, the transportation means information management unit 136 of the control unit 130 of the location management device 100 creates transportation means information 144 of the input pallet number. In addition, the created transportation means information 144 is displayed on the current work area pallet listing display region 122b. The current location information of the created transportation means information 144 is registered as the current work area.

The work area selection section 122c is configured to allow a work area registered in the work area master 146 to be selected. The selected work area pallet listing display region 122d is configured to display a listing of transportation means information 144 in which the work area selected at the work area selection section 122c is the current location information (the inventory area (1) in the example of Figure 12). In the pallet list edit screen 122 having such configurations, by moving transportation means information 144 in the current work area pallet listing display region 122b to the selected work area pallet listing display region 122d in a drag-and-drop manner, the current location information of the moved transportation means information 144 is changed from the current work area to the work area selected at the work area selection section 122c.

In addition, in the pallet list edit screen 122, by moving transportation means information 144 in the selected work area pallet listing display region 122d to the current work area pallet listing display region 122b in a drag-and-drop manner, the current location information of the moved transportation means information 144 is changed from the work area selected at the work area selection section 122c to the current work area. Further, in the pallet list edit screen 122, by selecting transportation means information 144 displayed in the current work area pallet listing display region 122b and the selected work area pallet listing display region 122d, it is possible to set or change the transportation destination information of the selected transportation means information 144 or delete the selected transportation means information 144.

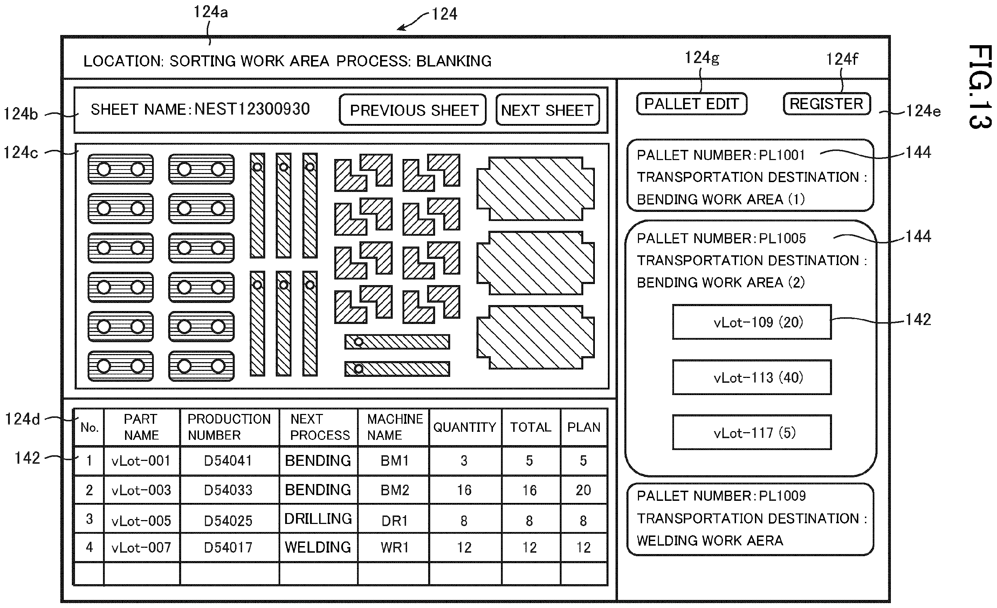

Figure 13 is a diagram showing an example of the sorting screen of the present embodiment.

As shown in Figure 13, the user can associate the WIP information 142 and the transportation means information 144 and edit and check the association information in the sorting work area for performing the sorting process on the displayed sorting screen 124. Note that, in the present embodiment, the sorting screen 124 is a screen of the transportation destination registration screen 126, which will be described later, for the sorting work area, and displays a partially different content than the transportation destination registration screen 126 of the other work areas, but there is no limitation thereto, and it may display the same content as the transportation destination registration screen 126 of the other work areas.

The sorting screen 124 includes a current work area display region 124a, a sheet name display region 124b, a sheet data display region 124c, a sheet WIP information listing display region 124d, a current work area pallet listing display region 124e, an association registration button 124f, and a pallet edit button 124g. The current work area display region 124a is configured to display a work area name of the current work area (sorting work area) and a manufacturing process name associated with the work area (sorting process).

The sheet name display region 124b is configured to display a sheet name included in processing schedule information 32 of a blanked sheet. The sheet data display region 124c is configured to display the sheet data (CAD drawing) included in the processing schedule information 32 of the blanked sheet. The sheet WIP information listing display region 124d is configured to display WIP information 142 of a WIP included in the blanked sheet.

The current work area pallet listing display region 124e is configured to display a listing of transportation means information 144 in which the current location information of the transportation means C is the current work area (sorting work area). When the pallet edit button 124g is pressed, the pallet list edit screen 122 is displayed.

In the sorting screen 124 having such configurations, a product to be associated is selected in the sheet data display region 124c or the sheet WIP information listing display region 124d, and thereafter, transportation means information 144 to be associated is selected in the current work area pallet listing display region 124e, so that WIP information 142 of the selected product and the selected transportation means information 144 are associated with each other. Note that the selection method may be a click operation (a tap operation if the display units 120 and 220 are touch screens), or may be a drag-and-drop operation of WIP information 142 to be associated from a portion corresponding to the WIP information 142 on the sheet data display region 124c or the sheet WIP information listing display region 124d to transportation means information 144 to be associated in the current work area pallet listing display region 124e. After the association, by pushing the association registration button 124f, association information is registered in the association master 148 of the storage unit 140 of the location management device 100.

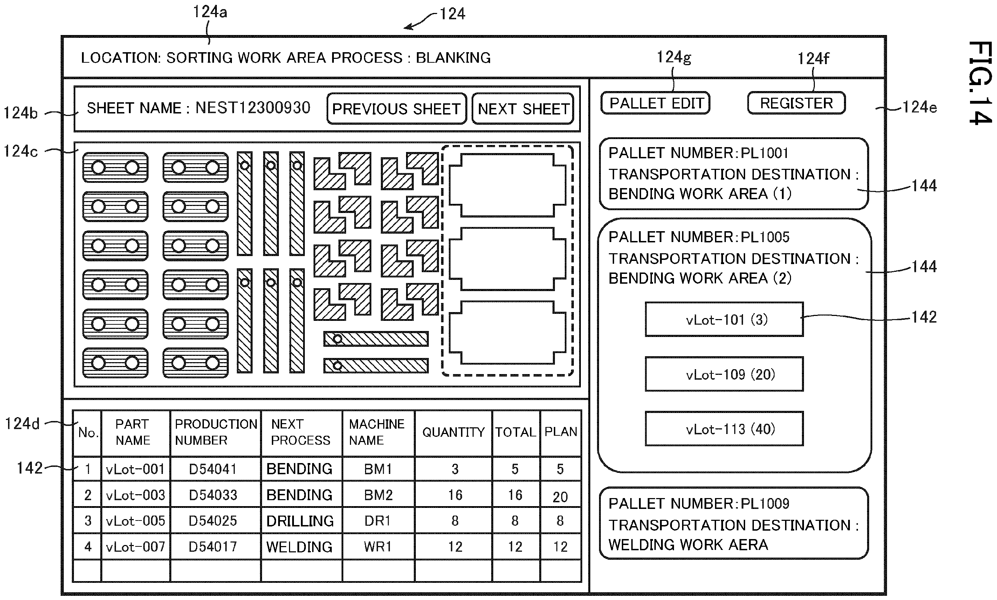

Figure 14 is a diagram showing an example of the sorting screen of the present embodiment.

As shown in Figure 14, the sorting screen 124 of the present embodiment is configured such that a portion corresponding to WIP information 142 associated with transportation means information 144 on the sheet data display region 124c is outlined, but there is no limitation thereto. By outlining the portion corresponding to the associated WIP information 142, WIPs that have not been associated are made clear, and omissions of sorting by the user can be reduced.

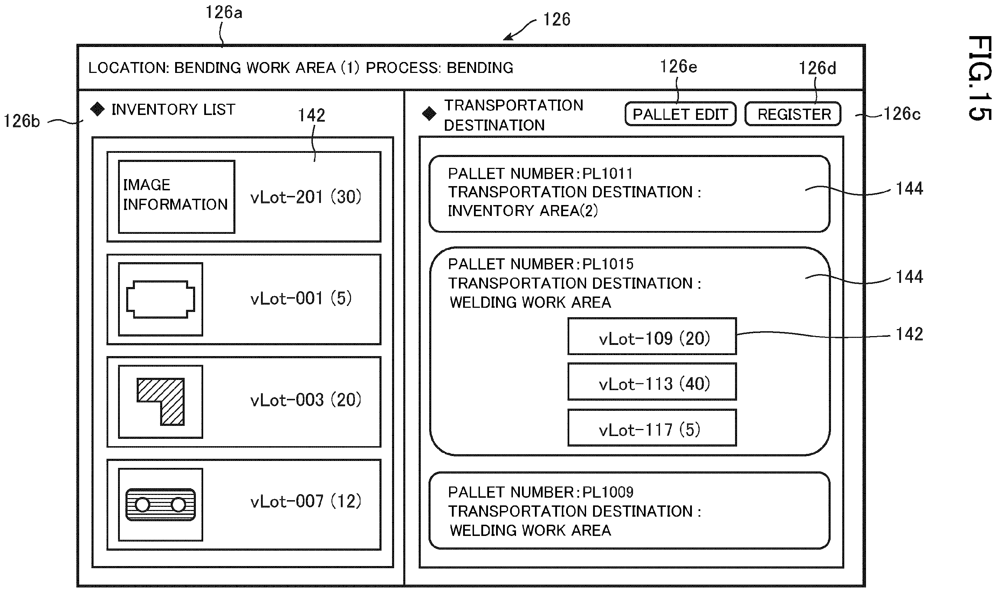

Figure 15 is a diagram showing an example of the transportation destination registration screen of the present embodiment.

As shown in Figures 14 and 15, the user can associate the WIP information 142 and the transportation means information 144 and edit and check the association information in each work area on the transportation destination registration screen 126. The transportation destination registration screen 126 includes a current work area display region 126a, an inventory WIP information listing display region 126b, a current work area pallet listing display region 126c, an association registration button 126d, and a pallet edit button 126e. The current work area display region 126a is configured to display a work area name of the current work area and a manufacturing process name associated with the work area.

The inventory WIP information listing display region 126b is configured to display a listing of WIP information 142 of WIPs in the current work area. In the present embodiment, the inventory WIP information listing display region 126b displays part names included in the WIP information 142 and images (CAD drawing) of the WIPs, but there is no limitation thereto. In addition, the inventory WIP information listing display region 126b is configured to display a listing of assembly part information 143 of assembly parts in the current work area.

Note that the WIPs and the assembly parts in the current work area include WIPs and assembly parts that are transported from the work area of the previous process and for which the work in the current work area has not been completed yet and WIPs and assembly parts for which the work in the current work area has already been completed, but only the WIPs and assembly parts for which the work in the current work area has already been completed are displayed on the inventory WIP information listing display region 126b by the control of the display control unit 132 of the control unit 130 of the location management device 100.

The current work area pallet listing display region 126c is configured to display a listing of transportation means information 144 in which the current location information of the transportation means C is the current work area. When the pallet edit button 126e is pressed, the pallet list edit screen 122 is displayed. In the transportation destination registration screen 126 having such configurations, WIP information 142 to be associated is selected in the inventory WIP information listing display region 126b, and thereafter, transportation means information 144 to be associated is selected in the current work area pallet listing display region 126c, so that the selected WIP information 142 and the selected transportation means information 144 are associated with each other.

Note that the selection method may be a click operation (a tap operation if the display units 120 and 220 are touch screens), or may be a drag-and-drop operation of WIP information 142 to be associated from the inventory WIP information listing display region 126b to transportation means information 144 to be associated in the current work area pallet listing display region 126c. After the association, by pressing the association registration button 126d, association information is registered in the association master 148 of the storage unit 140 of the location management device 100.

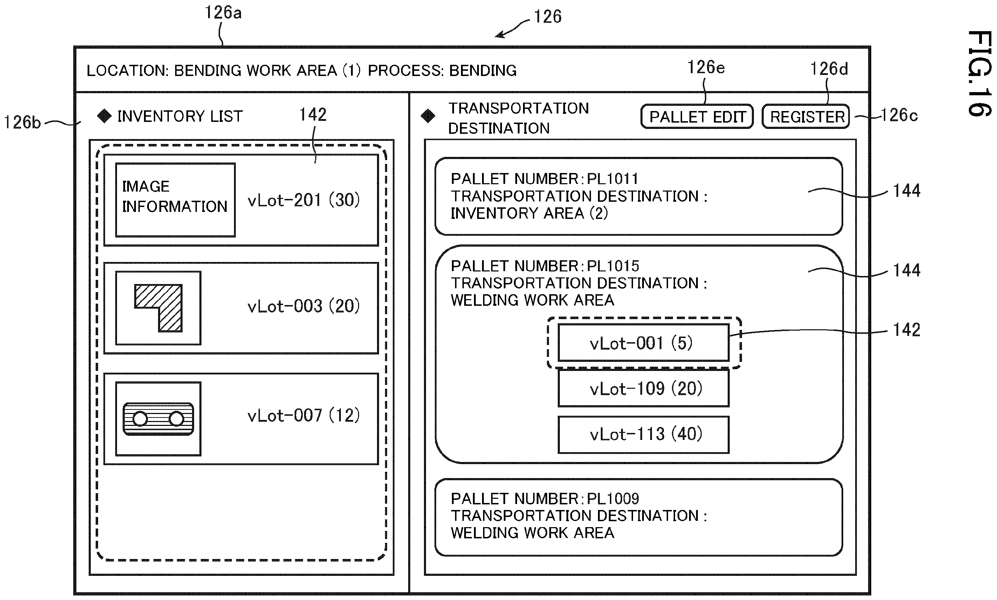

Figure 16 is a diagram showing an example of the transportation destination registration screen of the present embodiment.

As shown in Figures 15 and 16, the transportation destination registration screen 126 of the present embodiment is configured such that WIP information 142 associated with transportation means information 144 is moved from the inventory WIP information listing display region 126b to the current work area pallet listing display region 126c, but there is no limitation thereto. By moving the associated WIP information 142 to the current work area pallet listing display region 126c, WIPs that have not been associated are made clear, and omissions of registration of transportation destinations by the user can be reduced.

In addition, in the sorting screen 124 and the transportation destination registration screen 126, if the association unit 138 of the control unit 130 of the location management device 100 automatically associates WIP information 142 and transportation means information 144 in the association method described above, the state after the association is displayed on the sorting screen 124 and the transportation destination registration screen 126, and the user can check the WIP information 142 and the transportation means information 144 automatically associated with each other.

### [Location Management Method According to Present Embodiment]

Next, a location management method performed by the location management system 1 according to the present embodiment will be described. The location management method according to the present embodiment schematically includes: a production arrangement information creating step of creating production arrangement information 12 regarding a product including one or more parts; a WIP information creating step of creating WIP information 142 regarding a WIP under a manufacturing process of the product based on the production arrangement information 12; and an association step of associating the WIP information 142 and transportation means information 144 regarding transportation means C that carries the WIP and moves around the plant, and the transportation means information 144 includes current location information of the transportation means C.

In addition, the location management method includes a category information identifying step of identifying category information from the WIP information 142 and a WIP information grouping step of grouping the WIP information 142 according to the category information.

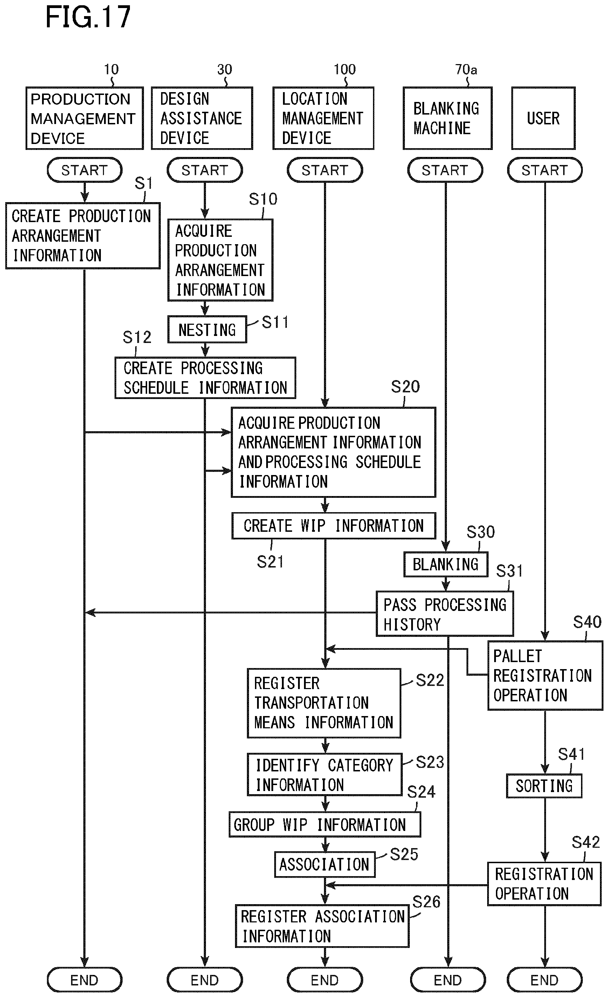

Figure 17 is a flow chart showing an example of the location management method of the present embodiment.

The location management method according to the present embodiment will be described in detail with reference to Figure 17. Note that, in the following description, description will be made in which only the blanking process and the sorting process of a series of manufacturing processes are considered and the registration of transportation means information 144 is manually performed by the user, but there is no limitation thereto.

First, the production management device 10 creates production arrangement information 12 (S1 in Figure 17: production arrangement information creating step). The production management device 10 saves the created production arrangement information 12 into the production technology management database of the server 50. In addition, the production management device 10 outputs a production arrangement document of the created production arrangement information 12. Thereafter, the production management device 10 passes the production arrangement document to the design assistance device 30.

The design assistance device 30 acquires the production arrangement information 12 of the production arrangement document from the production technology management database of the server 50 (S10 in Figure 17). Then, the design assistance device 30 performs nesting based on the acquired production arrangement information 12 (S11 in Figure 17: nesting step), and creates processing schedule information 32 of a nested sheet (S12 in Figure 17). The processing schedule information 32 created by the design assistance device 30 is saved in the production technology management database of the server 50.

After the processing schedule information 32 is created, the location management device 100 acquires the production arrangement information 12 created by the production management device 10 and the processing schedule information 32 created by the design assistance device 30 from the production technology management database of the server 50 (S20 in Figure 17). The WIP information management unit 134 of the control unit 130 of the location management device 100 creates WIP information 142 based on the production arrangement information 12 and the processing schedule information 32 acquired (S21 in Figure 17: WIP information creating step). Note that the WIP information management unit 134 may also create the WIP information 142 based on only the production arrangement information 12.

The blanking machine 70a retrieves the processing schedule information 32 from the production technology management database of the server 50 and performs blanking (S30 in Figure 17). In addition, the blanking machine 70a passes processing machine processing history to the production management device 10 at the time of start of the blanking, at the time of interruption of the blanking, at the time of completion of the blanking (S31 in Figure 17). The production management device 10 saves the processing history passed from the blanking machine 70a.

During the blanking or after the blanking, the user operates the location management device 100 or the work area terminal 200, and registers transportation means information 144 of a pallet to be used in the sorting process on the pallet list edit screen 122 (S40 in Figure 17). Specifically, the user first inputs the transportation means identifier of the pallet to be used to create new transportation means information 144, or, if the transportation means information 144 of the pallet to be used has been registered, selects the transportation means information 144 from the current work area pallet listing display region 122b or the selected work area pallet listing display region 122d of the pallet list edit screen 122.

The transportation means identifier may be input by using the input unit 110 of the location management device 100 or the input unit 210 of the work area terminal 200, or may be input by using the reading unit 230 of the work area terminal 200. Then, a transportation destination of the transportation means information 144 of the pallet to be used is set. Note that the current location information of the pallet to be used is the sorting work area.

The transportation means information management unit 136 of the control unit 130 of the location management device 100 registers the transportation means information 144 whose transportation destination is set (S22 in Figure 17). After the transportation means information 144 is registered, the association unit 138 of the control unit 130 identifies category information from WIP information 142 of a WIP for which the blanking has been done (S23 in Figure 17: category information identifying step). Then, the association unit 138 groups the WIP information 142 according to the category information (S24 in Figure 17: WIP information grouping step).

After the grouping, a group of WIP information 142 obtained by the grouping and transportation means information 144 of transportation means C carrying a plurality of WIPs included in the group of WIP information 142 are associated with each other (S25 in Figure 17: association step). Association information obtained by the association by the association unit 138 is displayed on the sorting screen 124 of the display unit 120 of the location management device 100 (or the display unit 220 of the work area terminal 200).

The user sorts WIPs for which the blanking has been done according to the association information displayed on the sorting screen 124 and loads them onto respective pallets (S41 in Figure 17). At this time, if a WIP is to be loaded onto a pallet different from that on the displayed association information, the association information is manually changed. After the sorting is completed, the user presses the association registration button 124f of the sorting screen 124 (S42 in Figure 17).

Thereafter, the association unit 138 of the control unit 130 of the location management device 100 registers the association information into the association master 148 of the storage unit 140 (S26 in Figure 17). In the above-described processes, the series of steps of the location management method according to the present embodiment is performed by the location management system 1.

### [Advantages of Location Management Device and Location Management System According to Present Embodiment]

As described above, the location management device 100 according to the present embodiment is configured in such a way as to be capable of managing WIP information 142 regarding a WIP under a manufacturing process of a product including one or more parts and transportation means information 144 regarding transportation means C configured to carry the WIP and move around a plant in association with each other, and the transportation means information 144 includes current location information of the transportation means C.

With such configurations, the location management device 100 according to the present embodiment has an advantage that it is possible to manage the current location of the WIP without inputting location information for each WIP by managing the WIP information 142 regarding the WIP and the transportation means information 144 including the current location information of the transportation means C carrying the WIP in association with each other.

In addition, the location management device 100 according to the present embodiment includes an input unit 110, and is configured in such a way as to be capable of managing the WIP information 142 and the transportation means information 144 in association with each other by a manual operation via the input unit 110. With such configurations, there is an advantage that, in case of failure in automatic association of the WIP information 142 and the transportation means information 144, it is possible to perform manual association or change the association information after the automatic association.

Further, in the location management device 100 according to the present embodiment, the WIP information 142 includes category information that allows for identifying the WIP, and the location management device 100 is configured in such a way as to be capable of performing: a category information identification operation of identifying the category information from the WIP information 142; a WIP information grouping operation of grouping the WIP information 142 according to the category information; and an association operation of associating a group of the WIP information 142 obtained by the grouping and the transportation means information 144 of the transportation means C carrying a plurality of the WIPs included in the group of WIP information 142. With such configurations, there is an advantage that, in the case of collectively mounting a plurality of WIPs onto one piece of transportation means C, the WIP information 142 of the group of WIPs can be collectively associated with the transportation means information 144 of the transportation means C carrying the WIPs, and therefore the time taken for the association can be shortened.

Furthermore, in the location management device 100 according to the present embodiment, the WIP information 142 includes manufacturing process information indicating the manufacturing process for completing the product, the manufacturing process information includes information about a work area used in each process, and the category information is information about a work area used in a next process. With such configurations, there is an advantage that WIP information 142 can be collected for each of the plurality of WIPs to be transported to the same work area.

In addition, in the location management device 100 according to the present embodiment, the WIP information 142 includes manufacturing process information indicating the manufacturing process for completing the product, the manufacturing process information includes information about a processing machine used in each process, and the category information is information about the processing machine 70 used in a next process. With such configurations, there is an advantage that WIP information 142 can be collected for each of the plurality of WIPs to be processed by the same processing machine 70 in the next process.

Further, in the location management device 100 according to the present embodiment, the WIP information 142 includes a bill of materials of the product including the WIP as an assembly part, and the category information is the bill of materials. With such configurations, there is an advantage that, when transporting a plurality of WIPs to the assembly process, the WIPs required for the assembly can be collected in advance.

Furthermore, in the location management device 100 according to the present embodiment, the WIP information 142 includes information about a material of the WIP, and the category information is information about the material. With such configurations, there is an advantage that, when transporting a plurality of WIPs to a secondary process in which processing is performed for each type of material, WIPs of the same type of material can be collected in advance.

In addition, the location management device 100 according to the present embodiment includes: a display unit 120 capable of displaying the WIP information 142; and a control unit 130 configured to control the display unit 120, in which the WIP information 142 includes category information that allows for identifying the WIP, the display unit 120 is configured in such a way as to be capable of displaying a plurality of pieces of the WIP information 142, and the control unit 130 controls the display unit 120 to highlight WIP information 142 of the plurality of pieces of WIP information 142 including the category information. With such configurations, there is an advantage that the user can easily visually recognize a plurality of pieces of WIP information 142 that should be collected.

Further, the location management device 100 according to the present embodiment includes: a display unit 120 capable of displaying the WIP information 142; and a control unit 130 configured to control the display unit 120, in which the display unit 120 is configured in such a way as to be capable of displaying one or more pieces of the WIP information 142, and the control unit 130 controls the display unit 120 to display only the WIP information 142 of the WIP for which processing is completed based on progress information of each processing work. With such configurations, there is an advantage that erroneous association of WIP information 142 of a WIP for which processing is not completed can be prevented.

Furthermore, the location management device 100 according to the present embodiment is configured in such a way as to be capable of registering the transportation means information 144 of the transportation means C input by inputting a unique transportation means identifier assigned to the transportation means C and uniquely identifying the transportation means C. With such configurations, there is an advantage that the registration of the transportation means information 144 is made easy, and alienation between the association information and the actual carrying state can be prevented.

In addition, the location management device 100 according to the present embodiment is configured in such a way as to be capable of acquiring positional information of the transportation means C, and is configured in such a way as to be capable of registering a current location of the transportation means C in the plant based on the positional information. With such configurations, there is an advantage that the location of the WIP can be checked in real time since the current location of the transportation means C is automatically registered.

Further, the location management device 100 according to the present embodiment is configured to, after an assembly process of combining a plurality of the WIPs into an assembly part, create assembly part information 143 of the assembly part and manage the WIP information 142 of all the WIPs included in the assembly part in association with the assembly part information 143. With such configurations, there is an advantage that the amount of information to be input or checked can be reduced since management can be performed with only the assembly part information 143 after the assembly process.

Furthermore, the location management device 100 according to the present embodiment is configured to, after an assembly process of combining a plurality of the WIPs into an assembly part, select one of the plurality of WIPs included in the assembly part as a representative WIP and manage the WIP information 142 of all the WIPs included in the assembly part in association with the WIP information 142 of the representative WIP. With such configurations, there is an advantage that the amount of information to be input or checked can be reduced since management can be performed with only the WIP information 142 of the representative WIP after the assembly process. In addition, there is an advantage that the amount of information handled by the location management device 100 can be reduced by using existing WIP information 142 without creating new information.

In addition, in the location management system 1 according to the present embodiment, the WIP information 142 is associated with the production arrangement information 12 on which the WIP information 142 is based, and the production management unit (production management device 10) is configured to manage progress of a manufacturing process of the product, and is configured in such a way as to be capable of checking the progress from the WIP information 142 associated with the production arrangement information 12. With such configurations, traceability of the WIP is enhanced, and the progress of the manufacturing process can be managed in more detail.

### [Variations]

While the preferred embodiment of the present invention has been described above, the technical scope of the present invention is not limited to the scope defined in the above-described embodiment. It is possible to make various changes or modifications to the above-described embodiment.

For example, in the above-described embodiment, description has been made that the location management device 100 includes the input unit 110, and is configured in such a way as to be capable of managing the WIP information 142 and the transportation means information 144 in association with each other by a manual operation via the input unit 110, but there is no limitation thereto, and the location management device 100 may not include the input unit 110 and may be incapable of associating the WIP information 142 and the transportation means information 144 by an manual operation.

In the above-described embodiment, description has been made that the WIP information 142 includes category information that allows for identifying the WIP, and the location management device 100 is configured in such a way as to be capable of performing: a category information identification operation of identifying the category information from the WIP information 142; a WIP information grouping operation of grouping the WIP information 142 according to the category information; and an association operation of associating a group of the WIP information 142 obtained by the grouping and the transportation means information 144 of the transportation means C carrying a plurality of the WIPs included in the group of WIP information 142, but there is no limitation thereto. The WIP information 142 may not include the category information. In addition, the location management device 100 may be incapable of performing the category information identification operation, the WIP information grouping operation, and the association operation.

In the above-described embodiment, description has been made that the WIP information 142 includes manufacturing process information indicating the manufacturing process for completing the product, the manufacturing process information includes information about a work area used in each process, and the category information is information about a work area used in a next process, but there is no limitation thereto. The WIP information 142 may not include the manufacturing process information indicating the manufacturing process for completing the product, and the manufacturing process information may not include the information about the work area used in each process. In addition, the category information may not be the information about the work area used in the next process.

In the above-described embodiment, description has been made that the WIP information 142 includes manufacturing process information indicating the manufacturing process for completing the product, the manufacturing process information includes information about a processing machine 70 used in each process, and the category information is information about the processing machine 70 used in a next process, but there is no limitation thereto. The manufacturing process information may not include the information about the processing machine 70 used in each process. In addition, the category information may not be the information about the processing machine 70 used in the next process.

In the above-described embodiment, description has been made that the WIP information 142 includes a bill of materials of the product including the WIP as an assembly part, and the category information is the bill of materials, but there is no limitation thereto, and the WIP information 142 may not include the bill of materials. In addition, the category information may not be the bill of materials.

In the above-described embodiment, description has been made that the WIP information 142 includes information about a material of the WIP, and the category information is information about the material, but there is no limitation thereto, and the WIP information 142 may not include the information about the material. In addition, the category information may not be the information about the material.

In the above-described embodiment, description has been made that the location management device 100 includes: a display unit 120 capable of displaying the WIP information 142; and a control unit 130 configured to control the display unit 120, in which the WIP information 142 includes category information that allows for identifying the WIP, the display unit 120 is configured in such a way as to be capable of displaying a plurality of pieces of the WIP information 142, and the control unit 130 controls the display unit 120 to highlight WIP information 142 of the plurality of pieces of WIP information 142 including the category information, but there is no limitation thereto. The control unit 130 may not control the display unit 120 to highlight the WIP information 142 of the plurality of pieces of WIP information 142 including the category information.

In the above-described embodiment, description has been made that the location management device 100 includes: a display unit 120 capable of displaying the WIP information 142; and a control unit 130 configured to control the display unit 120, in which the display unit 120 is configured in such a way as to be capable of displaying one or more pieces of the WIP information 142, and the control unit 130 controls the display unit 120 to display only the WIP information 142 of the WIP for which processing is completed based on progress information of each processing work, but there is no limitation thereto. The control unit 130 may not control the display unit 120 to display only the WIP information 142 of the WIP for which processing is completed based on the progress information of each processing work.

In the above-described embodiment, description has been made that the location management device 100 is configured in such a way as to be capable of registering the transportation means information 144 of the transportation means C input by inputting a unique transportation means identifier assigned to the transportation means C and uniquely identifying the transportation means C, but there is no limitation thereto. The location management device 100 may be incapable of registering the transportation means information 144 of the transportation means C input by inputting the transportation means identifier.

In the above-described embodiment, description has been made that the location management device 100 is configured in such a way as to be capable of acquiring positional information of the transportation means C, and is configured in such a way as to be capable of registering a current location of the transportation means C in the plant based on the positional information, but there is no limitation thereto. The location management device 100 may be incapable of acquiring the positional information of the transportation means C.

In the above-described embodiment, description has been made that the location management device 100 is configured to, after an assembly process of combining a plurality of the WIPs into an assembly part, create assembly part information 143 of the assembly part and manage the WIP information 142 of all the WIPs included in the assembly part in association with the assembly part information 143, but there is no limitation thereto. The location management device 100 may not create the assembly part information 143 of the assembly part after the assembly process.

In the above-described embodiment, description has been made that the location management device 100 is configured to, after an assembly process of combining a plurality of the WIPs into an assembly part, select one of the plurality of WIPs included in the assembly part as a representative WIP and manage the WIP information 142 of all the WIPs included in the assembly part in association with the WIP information 142 of the representative WIP, but there is no limitation thereto. The location management device 100 may not associate the WIP information 142 of all the WIPs included in the assembly part with the WIP information 142 of the representative WIP after the assembly process.

In the above-described embodiment, description has been made that the WIP information 142 is associated with the production arrangement information 12 on which the WIP information 142 is based, and the production management unit (production management device 10) is configured to manage progress of a manufacturing process of the product, and is configured in such a way as to be capable of checking the progress from the WIP information 142 associated with the production arrangement information 12, but there is no limitation thereto. The production management unit (production management device 10) may be incapable of checking the progress from the WIP information 142 associated with the production arrangement information 12.

In the above-described embodiment, description has been made that the processing machine 70 is configured in such a way as to be capable of communicating with the production management device 10, the design assistance device 30, the server 50 and the location management device 100, but there is no limitation thereto, and the processing machine 70 may be incapable of communicating with the production management device 10, the design assistance device 30, the server 50 and the location management device 100.

### Reference Signs List

- 1: location management system
- 10: production management device
- 12: production arrangement information
- 30: design assistance device
- 32: processing schedule information
- 50: server
- 70: processing machine
- 70a: blanking machine
- 70b: secondary processing machine
- 90: inventory shelf
- 100: location management device
- 110: input unit
- 120: display unit
- 122: pallet list edit screen
- 122a: pallet number input section
- 122b: current work area pallet listing display region
- 122c: work area selection section
- 122d: selected work area pallet listing display region
- 124: sorting screen
- 124a: current work area display region
- 124b: sheet name display region
- 124c: sheet data display region
- 124d: sheet WIP information listing display region
- 124e: current work area pallet listing display region
- 124f: association registration button
- 124g: pallet edit button
- 126: transportation destination registration screen
- 126a: current work area display region
- 126b: inventory WIP information listing display region
- 126c: current work area pallet listing display region
- 126d: association registration button
- 126e: pallet edit button
- 130: control unit
- 132: display control unit
- 134: WIP information management unit
- 136: transportation means information management unit
- 138: association unit
- 140: storage unit
- 142: WIP information
- 143: assembly part information
- 144: transportation means information
- 146: work area master
- 147: association program
- 148: association master
- 200: work area terminal
- 210: input unit
- 220: display unit
- 230: reading unit
- 240: control unit
- 242: display control unit
- 250: storage unit
- 252: work area identifier
- AP: access point
- C: transportation means

## Claims

1. A location management device configured in such a way as to be capable of managing
work-in-progress information (WIP information) regarding a work in progress (WIP) under a manufacturing process of a product including one or more parts and
transportation means information regarding transportation means configured to carry the WIP and move around a plant
in association with each other,
the transportation means information including current location information of the transportation means.

2. The location management device according to claim 1, further comprising an input unit, wherein
the location management device is configured in such a way as to be capable of managing the WIP information and the transportation means information in association with each other by a manual operation via the input unit.

3. The location management device according to claim 1 or 2, wherein
the WIP information includes category information that allows for identifying the WIP, and
the location management device is configured in such a way as to be capable of performing:
a category information identification operation of identifying the category information from the WIP information;
a WIP information grouping operation of grouping the WIP information according to the category information; and
an association operation of associating a group of the WIP information obtained by the grouping and the transportation means information of the transportation means carrying a plurality of the WIPs included in the group of WIP information.

4. The location management device according to claim 3, wherein
the WIP information includes manufacturing process information indicating the manufacturing process for completing the product,
the manufacturing process information includes information about a work area used in each process, and
the category information is information about a work area used in a next process.

5. The location management device according to claim 3, wherein
the WIP information includes manufacturing process information indicating the manufacturing process for completing the product,
the manufacturing process information includes information about a processing machine used in each process, and
the category information is information about a processing machine used in a next process.

6. The location management device according to claim 3, wherein
the WIP information includes a bill of materials of the product including the WIP as an assembly part, and
the category information is the bill of materials.

7. The location management device according to claim 3, wherein
the WIP information includes information about a material of the WIP, and
the category information is information about the material.

8. The location management device according to claim 1 or 2, further comprising:
a display unit capable of displaying the WIP information; and
a control unit configured to control the display unit, wherein
the WIP information includes category information that allows for identifying the WIP,
the display unit is configured in such a way as to be capable of displaying a plurality of pieces of the WIP information, and
the control unit controls the display unit to highlight WIP information of the plurality of pieces of WIP information including the category information.

9. The location management device according to claim 1 or 2, further comprising:
a display unit capable of displaying the WIP information; and
a control unit configured to control the display unit, wherein
the display unit is configured in such a way as to be capable of displaying one or more pieces of the WIP information, and
the control unit controls the display unit to display only the WIP information of the WIP for which processing is completed based on progress information of each processing work.

10. The location management device according to claim 1 or 2, wherein the location management device is configured in such a way as to be capable of registering the transportation means information of the transportation means input by inputting a unique transportation means identifier assigned to the transportation means and uniquely identifying the transportation means.

11. The location management device according to claim 1 or 2, wherein the location management device is
configured in such a way as to be capable of acquiring positional information of the transportation means, and
configured in such a way as to be capable of registering a current location of the transportation means in the plant based on the positional information.

12. The location management device according to claim 1 or 2, wherein the location management device is configured to, after an assembly process of combining a plurality of the WIPs into an assembly part, create assembly part information of the assembly part and manage the WIP information of all the WIPs included in the assembly part in association with the assembly part information.

13. The location management device according to claim 1 or 2, wherein the location management device is configured to, after an assembly process of combining a plurality of the WIPs into an assembly part, select one of the plurality of WIPs included in the assembly part as a representative WIP and manage the WIP information of all the WIPs included in the assembly part in association with the WIP information of the representative WIP.

14. A location management system comprising:
a location management device; and
a production management unit, wherein
the location management device is configured in such a way as to be capable of managing work-in-progress information (WIP information) regarding a work in progress (WIP) under a manufacturing process of a product including one or more parts and transportation means information regarding transportation means configured to carry the WIP and move around a plant in association with each other,
the production management unit is configured to create production arrangement information regarding the product,
the WIP information is created based on the production arrangement information, and
the transportation means information includes current location information of the transportation means.

15. The location management system according to claim 14, wherein
the WIP information is associated with the production arrangement information on which the WIP information is based, and
the production management unit is configured to manage progress of a manufacturing process of the product, and is configured in such a way as to be capable of checking the progress from the WIP information associated with the production arrangement information.

16. A location management system comprising:
a location management device; and
a design assistance unit, wherein
the location management device is configured in such a way as to be capable of managing work-in-progress information (WIP information) regarding a work in progress (WIP) under a manufacturing process of a product including one or more parts and transportation means information regarding transportation means configured to carry the WIP and move around a plant in association with each other,
the design assistance unit is configured to perform nesting of the parts and create processing schedule information regarding sheet data in which the parts are nested,
the WIP information is created based on the processing schedule information, and
the transportation means information includes current location information of the transportation means.

17. A location management system comprising:
a location management device; and
a work area terminal used in each work area in a plant, and
the location management device is configured in such a way as to be capable of managing work-in-progress information (WIP information) regarding a work in progress (WIP) under a manufacturing process of a product including one or more parts and transportation means information regarding transportation means configured to carry the WIP and move around the plant in association with each other, and is configured to allow the WIP information and the transportation means information to be viewed in association with each other on the work area terminal.

18. A location management method comprising:
creating production arrangement information regarding a product including one or more parts;
creating work-in-progress information (WIP information) regarding a work in progress (WIP) under a manufacturing process of the product based on the production arrangement information; and
associating the WIP information and transportation means information regarding transportation means configured to carry the WIP and move around a plant,
the transportation means information including current location information of the transportation means.
